(19) Europäisches Patentamt
European Patent Office
Office européen des brevets

(11) EP 0 739 924 A1

(12) **DEMANDE DE BREVET EUROPEEN**

(43) Date de publication:
**30.10.1996 Bulletin 1996/44**

(21) Numéro de dépôt: **96400901.3**

(22) Date de dépôt: **26.04.1996**

(51) Int Cl.[6]: **C08G 69/48**, C08G 63/91, C08G 65/32, C08G 69/40, C08G 69/44

(84) Etats contractants désignés:
**AT BE CH DE DK ES FI FR GB GR IE IT LI LU NL PT SE**

(30) Priorité: **27.04.1995 FR 9505061**

(71) Demandeur: **ELF ATOCHEM S.A.**
**92800 Puteaux (FR)**

(72) Inventeurs:
- **Fischer, Thomas**
  **72270 Mezeray (FR)**
- **Fradet, Alain**
  **92130 Issy les Moulineaux (FR)**
- **Judas, Didier**
  **92300 Levallois-Perret (FR)**

(74) Mandataire: **Pochart, François et al**
**Cabinet Hirsch,**
**34, rue de Bassano**
**75008 Paris (FR)**

(54) **Polymères et copolymères issus de l'addition d'oligomères à terminaisons di-carboxy et de bisimidazolines et leur procédé d'obtention**

(57) Polymères et copolymères comprenant au moins un motif récurrent de formule :

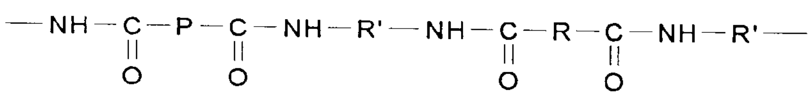

dans laquelle :

- R est une liaison simple ou une chaîne hydrocarbonée,
- R' est une chaîne hydrocarbonée à deux ou trois atomes de carbone,

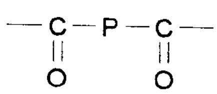

est le reste d'un oligomère

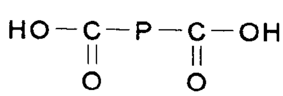

Procédé d'obtention de ces polymères et copolymères.

EP 0 739 924 A1

## Description

La présente invention concerne des polymères et des copolymères pouvant atteindre des masses molaires élevées et leur procédé d'obtention à pression atmosphérique, sans élimination de sous-produits, par une réaction rapide adaptable au procédé R.I.M. (réaction injection moulding) à 150-350° C. Plus précisément, cette réaction est une addition de coupleurs de chaînes de type bisimidazolines et d'oligomères à extrémités réactives carboxy.

Les polycondensations classiques sont des réactions équilibrées. Il est difficile d'obtenir des polymères de masses molaires élevées à moins de travailler à température élevée, sous pression réduite pendant un temps de réaction très long, d'où l'existence de réactions secondaires et éventuellement de dégradations des polymères.

Pour pallier ces difficultés, la demanderesse a fait réagir en masse des oligomères bien définis à extrémités réactives, à une température supérieure à leur température de fusion, avec des molécules appelées coupleurs de chaîne (CC) pour obtenir un produit de forte masse molaire. Les CC auxquels la demanderesse s'est intéressée sont plus précisément, des bisimidazolines.

Il est connu d'utiliser des coupleurs de chaînes pour accroître les masses molaires de polymères de masses molaires déjà élevées, porteurs de fonctions réactives, mais présentes en faible teneur. On augmente alors la viscosité de ces polymères, et on diminue l'acidité résiduelle.

Ainsi, le brevet japonais Kokai Tokkyo Koho JP 63 099 228 décrit la coextrusion d'un polytéréphtalate d'éthylène de masse molaire élevée et comportant peu de fonctions carboxy terminales, et d'une bisoxazoline.

Toutefois, ce document selon lequel les produits de départ sont des polymères de masses molaires élevées, n'indique pas comment surmonter les difficultés d'obtention de tels polymères, et particulièrement par polycondensation. D'autre part, il ne mentionne pas l'utilisation de bisimidazolines.

Des demandes de brevets européens au nom de la demanderesse décrivent des réactions entre des oligomères à extrémités réactives et des bisoxazolines ou bisoxazines (EP 93 401873.0 21/09/93) ou des bisoxazolones ou bisoxazinones (EP 93 401872.2 21/09/93).

L'utilisation dans les mêmes conditions de bisimidazolines présente l'intérêt de conduire après couplage à des jonctions entre les restes P contenant uniquement des fonctions amide, comme le montre le motif récurrent.

La présente invention a donc pour objet des polymères et copolymères comprenant au moins un motif récurrent de formule :

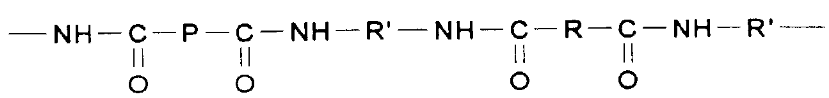

dans laquelle :

- R est une liaison simple, une chaîne hydrocarbonée linéaire.
- R' est une chaîne hydrocarbonée aliphatique ou aromatique pouvant être substituée et dont la chaîne la plus courte reliant les deux motifs -NH- voisins comporte deux ou trois atomes de carbone, et

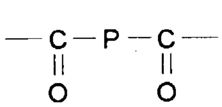 est le reste d'un oligomère 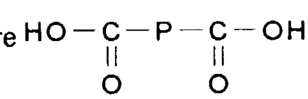

R peut par exemple consister en :

- une liaison simple
- une chaîne hydrocarbonée du type $(CH_2)_q$ avec q compris entre 1 et 24 dans laquelle un ou plusieurs atomes de carbone peuvent être mono-ou di-substitués et pouvant comporter un cycle aliphatique ou aromatique, ou encore une insaturation oléfinique,
- un ortho-, méta- ou para-phénylène, ou un ortho-, méta- ou para-alkylphénylène, pouvant être substitués.

R' peut être par exemple constitué de :

- une chaîne hydrocarbonée du type $-(CH_2)_p-$, avec p = 2 ou 3, dont un ou plusieurs atomes de carbone constitutifs peuvent être mono-ou di-substitués par des groupes alkyle tels que les groupes méthyle, éthyle, propyle,
- deux de ces atomes de carbone consécutifs pouvant de surcroît faire partie d'un cycle benzénique, pouvant lui même être substitué par un ou plusieurs groupes alkyle.

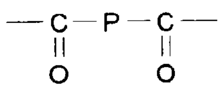 est le reste d'un oligomère 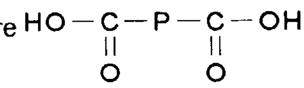

mono-ou polyséquencé dont les séquences peuvent par exemple consister en polyamide, polyéther, polyester.

Cet oligomère peut être, en particulier :
a) un polyamide à extrémités di-COOH de formule :

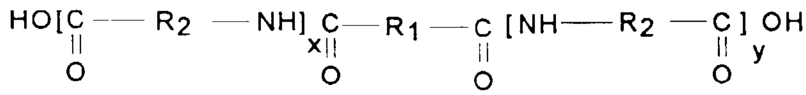

dans laquelle :

- $R_2$ est :
  - une chaîne hydrocarbonée constituant un lactame et/ou un aminoacide,
  - une structure

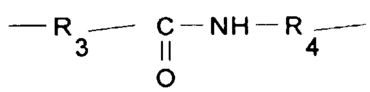

dans laquelle $R_3$ et $R_4$ sont respectivement les restes hydrocarbonés d'un diacide et d'une diamine ;

- $R_1$ représente le reste du diacide organique utilisé comme limitateur de chaîne ;
- x et y sont des nombres entiers $\geq 0$ tels que $x + y \geq 1$.
  Un tel polyamide peut être obtenu à partir :
  - de lactame de formule

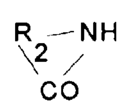

et/ou d'aminoacide de formule $H_2N-R_2-COOH$ et de diamine $H_2N-R_4-NH_2$, en présence d'un excès de diacide de formule $HOOC-R_3-COOH$.

Les lactames de formule :

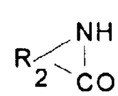

sont par exemple en $C_5$ à $C_{14}$ tels que les caprolactames, dodécalactames.

Les aminoacides de formule $H_2N-R_2-COOH$ sont par exemple des aminoacides aliphatiques en $C_5$ à $C_{24}$ tels que l'acide 11-aminoundécanoïque.

Les diacides de formule $HOOC-R_1-COOH$ et $HOOC-R_3-COOH$ peuvent être :

- des diacides aromatiques, par exemple acides iso et téréphtalique, acides naphtalènes dicarboxyliques (en position 2,6 ; 1,5 ;2,7), 4,4'-dicarboxydiphényléther, 4,4'-dicarboxybiphényle,
- des diacides ou anhydrides aliphatiques, par exemple en $C_4$ à $C_{24}$ linéaires ou ramifiés tels qu'acides adipique, sébacique, décane-1,10-dioïque, dodécane-1,12-dioïque, fumarique, anhydride maléique,
- des diacides cycloaliphatiques tels qu'acide cyclohexane-1,4-dicarboxylique.

Les diamines de formule $H_2N-R_4-NH_2$ peuvent être :

- des diamines cycloaliphatiques, par exemple 4,4'-diamino-dycyclohexyl méthane substituée ou non telle la bis (4-amino-3-méthylcyclohexyl) méthane, l'isophorone diamine,
- des diamines aliphatiques, par exemple en $C_4$ à $C_{24}$ linéaires ou ramifiés, telles que l'hexaméthylène-1,6-diamine, la dodécaméthylène-1,12-diamine.

Des exemples de tels oligomères sont décrits dans EP-A-0 281 461 et EP-A-0 313 436.

b) un polyester à extrémités di-COOH à structure aliphatique ou semi-aromatique pouvant comporter une ou plusieurs insaturations oléfiniques, obtenu à partir de diacide et/ou d'anhydride d'acide en excès, tels que l'anhydride succinique ou phtalique, et ceux cités précédemment, et de diol, tel que diol aliphatique en $C_2$ à $C_{24}$ linéaire ou ramifié, par exemple éthylène glycol, propylène glycol, butane -1,4-diol, pentane -1-5-diol, hexane-1,6-diol, diéthylène glycol, triéthylène glycol, et ayant pour formule :

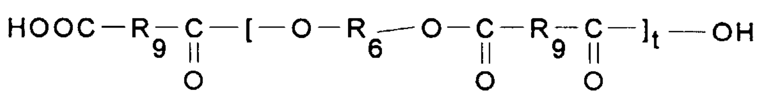

dans laquelle t est ≥ à 1, $R_6$ représente le reste d'un diol, et $R_9$ le reste d'un diacide et/ou d'un anhydride d'acide,

c) un polyéther à terminaisons di-COOH de formule :

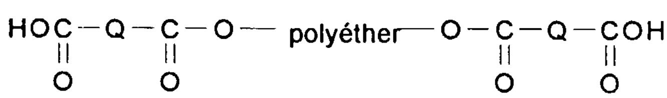

dans laquelle Q est une chaîne hydrocarbonée de type $(CH_2)_n$, n étant compris entre 1 et 24, un ou plusieurs atomes de carbone pouvant être mono-ou disubstitués, ce polyéther étant obtenu par modification chimique d'un polyéther di-OH, telle que la réaction avec 2 moles d'un diacide, par mole de polyéther, ce polyéther diOH pouvant consister en polyéthylène glycol, polypropylène glycol, polytétraméthylène glycol, ou en leurs copolymères,

d) un oligomère triséquencé (a = 1) ou polyséquencé (a > 1) de formule :

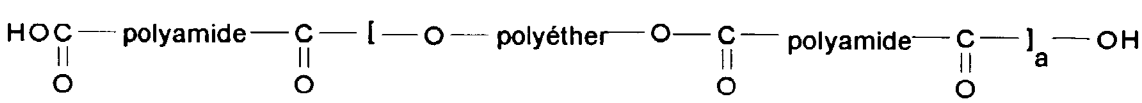

obtenu à partir de polyamide à extrémités di-COOH et de polyéther à extrémités di-OH, tels que ceux décrits précédemment,

e) un oligomère obtenu par substitution d'une séquence polyester à chaque séquence polyamide d'un oligomère précédent, c'est-à-dire un oligomère triséquencé (a = 1) ou polyséquencé (a > 1) de formule :

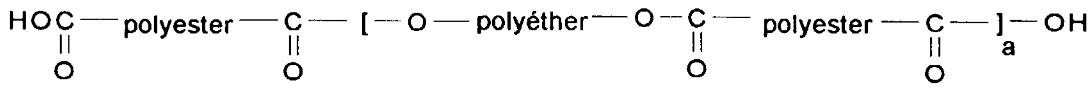

Les oligomères

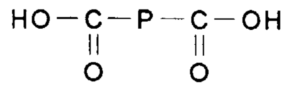

mis en oeuvre ont de préférence des viscosités de solutions, déterminées dans le méta-crésol à 30° C, à des concentrations de 0,5 g/dl, comprises entre 0,05 et 0,50 dl $g^{-1}$, et des masses molaires moyennes en nombre $M_n$ comprises entre 300 et 5000.

Les polymères selon la présente invention sont obtenus par réaction d'addition en masse d'oligomères

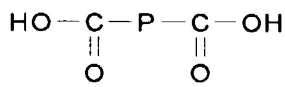

et de bisimidazolines.
les bisimidazolines sont des composés de formule générique :

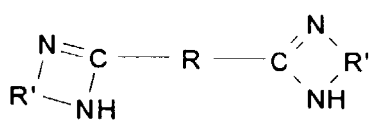

dans laquelle R et R' sont tels que précédemment définis.

Un autre objet de la présente invention est le procédé de préparation des bisimidazolines.

Quatre types de synthèses conduisant à des bisimidazolines sont décrites dans la littérature :

1- Synthèse directe par réaction entre dinitriles et diamines sans catalyseur en solution dans l'éthanol, ou en présence de catalyseurs comme le soufre ou comme des sels métalliques,
2- Synthèse par réaction entre dicarbothioamides et diamines,
3- Synthèse par réaction entre diimidoesters et diamines,
4- Synthèse par réaction entre dithiocarboxylates et diamines.

Ces réactions sont des réactions entre diamines et dérivés de diacides. La voie 1 est employé de préférence, car le dérivé de diacide de départ, un dinitrile est un composé beaucoup moins coûteux que les dithioamides, dithioesters ou diimidoesters utilisés dans les autres voies.

Le brevet japonais JP 24 965 utilise ainsi une réaction entre dinitrile et diamine en présence de soufre. Selon JP 24 965, la bisimidazoline A peut être obtenue à partir de l'adiponitrile et l'éthylène diamine.

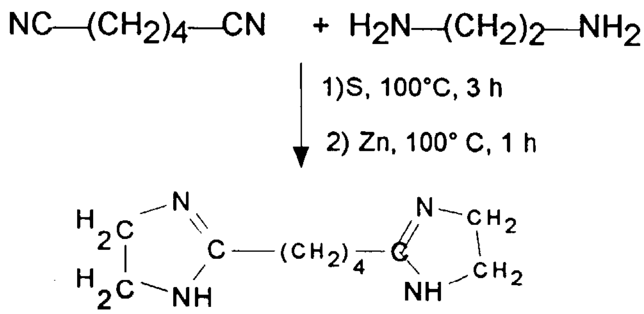


A

Ce procédé fait appel à l'ajout de zinc en fin de réaction. Dans ces conditions, la purification de la bisimidazoline finale devient délicate, et les rendements sont faibles.

Le procédé, selon notre invention, consiste à ajouter un alcool aliphatique de point d'ébullition supérieur à 80° C, comme le n-pentanol, pendant la première étape, et à supprimer l'ajout de zinc. Dans ces conditions, les produits de départ restent en solution, et le produit final peut être récupéré par filtration, avant d'être éventuellement récristallisé. Les rendements sont nettement améliorés.

La réaction d'addition ou de couplage d'oligomères :

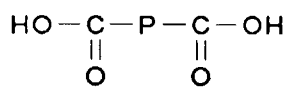

et de bisimidazolines est conforme au schéma général suivant :

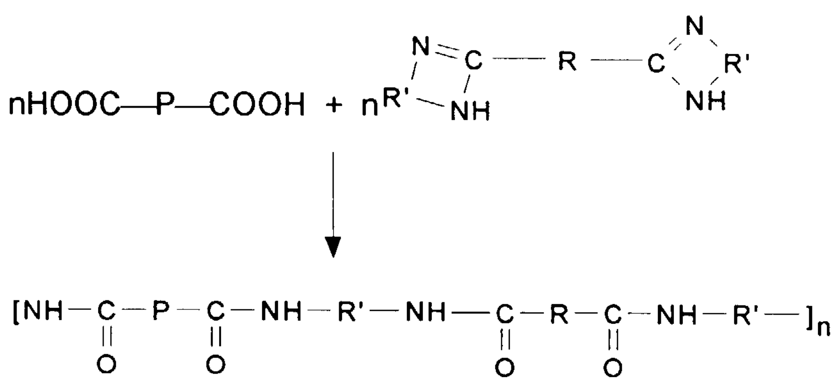

Pour effectuer cette synthèse, il convient de choisir une température telle que la viscosité de l'oligomère soit suffisamment faible, et notamment inférieure à 500 Pa.s et de préférence inférieure à 300 Pa.s, pour que les molécules de coupleurs de chaînes puissent se disperser, s'incorporer et/ou se solubiliser dans l'oligomère. Cette température est comprise entre 100 et 350° C, et de préférence entre 150 et 330°C.

La durée de la réaction sous atmosphère inerte est comprise entre 1 et 120 minutes, de préférence entre 5 et 30 minutes, à pression atmosphérique.

On peut aussi obtenir des polymères selon l'invention, dont les viscosités de solution déterminées dans le méta-crésol à 30° C, à des concentrations de 0,5 g/dl sont supérieures à celles de l'oligomère (ou des oligomères) de départ pouvant atteindre, par exemple, des valeurs supérieures à 0,8 dl $g^{-1}$, de masses molaires moyennes en nombre $M_n$ élevées, supérieures à 10 000, sans élimination de sous-produits et sans les autres difficultés inhérentes aux polycondensations classiques.

On peut utiliser un ou plusieurs coupleurs de chaînes et un ou plusieurs oligomères. Ainsi, l'ajout simultané ou au contraire, consécutif, d'oligomères différents, permet d'obtenir des polymères à caractères statistiques ou séquencés plus ou moins prononcés.

L'utilisation d'un catalyseur n'est pas nécessaire, mais accélère la réaction. On ajoute alors 0,001 à 2 % en poids,

par rapport aux oligomères et aux coupleurs de chaînes, et de préférence 0,01 à 0,5 % d'un ou plusieurs catalyseurs classiques, tels que la 4,4'diméthylaminopyridine, l'acide paratoluènesulfonique, $H_3PO_4$, NaOH, ou ceux décrits dans la demande de brevet européen EP-A-425 341 au nom de la Demanderesse.

Dans ces conditions, la réaction peut être effectuée en discontinu dans un réacteur agité, ou dans une extrudeuse. On peut alors opérer par dry blend, ou incorporer le coupleur dans l'oligomère fondu au niveau d'un fourreau de l'extrudeuse, en l'introduisant en continu en fonction du débit de l'extrudeuse afin de respecter la stoechiométrie des fonctions réactives.

De préférence, on maintient le rapport

[-COOH] / [- 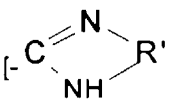 ] entre 0,95 et 1,05

De ce fait, le produit de la réaction comportera des groupements terminaux -COOH si ce rapport est supérieur à 1, des groupements terminaux :

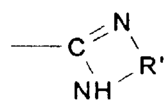

si ce rapport est inférieur à 1, ou à la fois ces deux groupements terminaux si ce rapport est égal à 1.

Les exemples suivants illustrent l'invention.

Dans ces exemples :

- les points de fusion $T_f$ et de transition vitreuse $T_g$ ont été déterminés par Differential Scanning Calorimetry (DSC) (DuPont 9900). Les points de fusion ont été déterminés au maximum de l'endotherme de fusion à une vitesse de chauffage de 20° C/min, au second passage après un cycle de chauffage à 20° C/min. jusqu'à une température supérieure au point de fusion de l'échantillon analysé, suivi d'un refroidissement à 40° C/min. jusqu'à température ambiante.
- Les pertes de masse ont été mesurées par Thermogravimétrie (TGA DuPont 951) à 20° C/min. $T_{5\%}$ correspond à la température à laquelle le produit a perdu 5 % de sa masse initiale.
- Les dosages chimiques ont été effectués sur un appareil Mettler DL40 RC. Un dosage à blanc a toujours été effectué avant le dosage proprement dit.

L'acidité a été titrée par une solution alcoolique de potasse 0,1N ou 0,05N, l'échantillon étant dissous dans un mélange toluène/chloroforme 1/1 (vol) ou dans l'alcool benzylique à 40° C lorsqu'il n'était pas soluble dans les conditions précédentes (cas des oligomères, polymères et copolymères contenant des blocs polyamide).

- La viscosité de solution $\eta_{inh}$ a été déterminée dans le méta-crésol à 30° C à des concentrations de 0,5 g/dl.

Les coupleurs de chaînes utilisés et les oligomères de départ sont les suivants :

Coupleurs de chaînes :

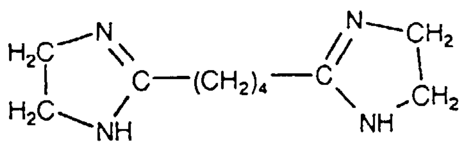

A

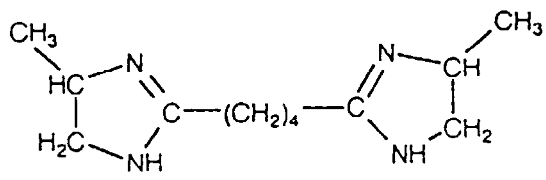

B

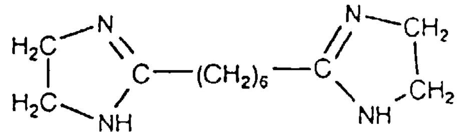

C

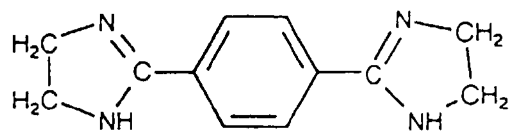

D

E ; F (Voir tableau I).

Oligomères :

Les oligomères I et II sont représentés ci-dessous :

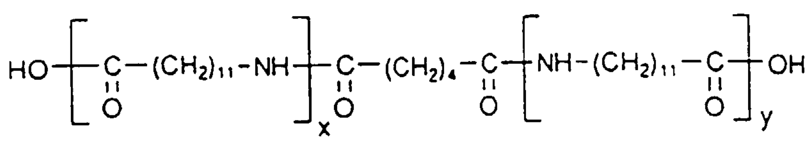

I

$x, y \geq 0$

$\overline{x+y} = 4.55$

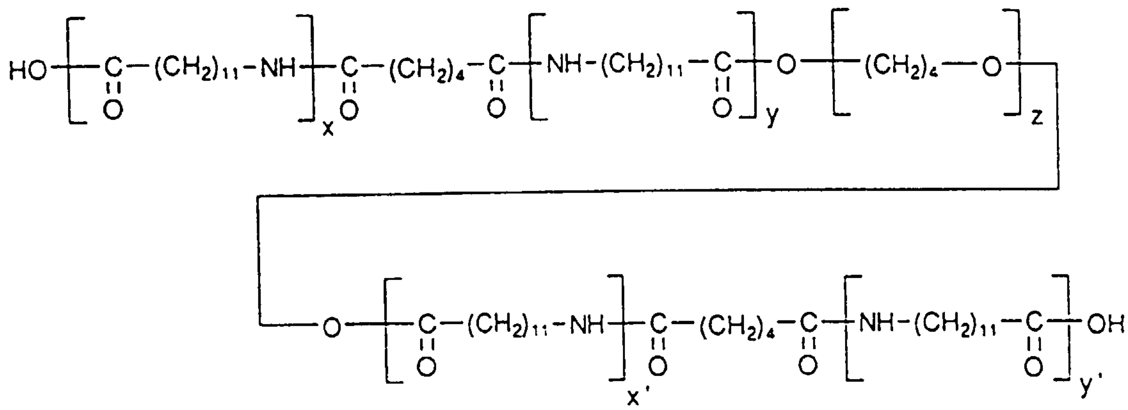

$x, x', y, y' \geq 0$

II

$\overline{x+y} = \overline{x'+y'} = 3{,}86$

$z = 14{,}19$

L'oligomère III, à fonctions terminales di-COOH, est obtenu à partir :

- d'acide téréphtalique (T)
- d'acide isophtalique (I)
- de lactame 12(L12)
- et de bis (4-amino-3-méthyl cyclohexyl) méthane (BMACM) avec T/I/L12/BMACM = 2,8/1,2/3/3 (en moles).

L'oligomère IV est obtenu à partir des mêmes monomères avec T/I/L12/BMACM = 3,6/2,4/5/5 (en moles).
L'oligomère V, à fonctions terminales di-COOH, est obtenu à partir :

- d'acide téréphtalique (T),
- d'hexaméthylène diamine (HMDA),
- et de lactame 12 (L12),
avec T/HMDA/L12 = 6/5/6 (en moles)

Contrairement aux oligomères III et IV, amorphes, l'oligoamide V est semi-cristallin.
Les caractéristiques des oligomères de départ sont consignées dans le tableau ci-dessous :

| Oligomères | Fonctions COOH terminales (mol $kg^{-1}$) | $\eta_{inh}$ ($dlg^{-1}$) | $\overline{M_n}$ | Tf (°C) | $T_{5\%}$ (°C) |
|---|---|---|---|---|---|
| I | 1,915 | 0,16 | 1045 | 145 | 355 |
| II | 0,71 | 0,28 | 2817 | 151 | 340 |
| III | 1,072 | 0,18 | 1865 | -- | 335 |
| IV | 0,667 | 0,25 | 3000 | -- | 348 |
| V | 0,775 | 0,18 | 2580 | 265 | 345 |

| Bisimidazoline | R | R' |
|---|---|---|
| A | $-(CH_2)_4-$ | $-CH_2-CH_2$ |
| B | $-(CH_2)_4-$ | 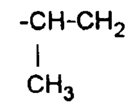 |
| F | $-(CH_2)_5-$ | $-CH_2-CH_2$ |
| C | $-(CH_2)_6-$ | $-CH_2-CH_2$ |
| E | $-(CH_2)_4-$ | 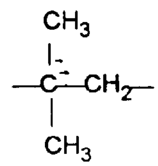 |
| D | 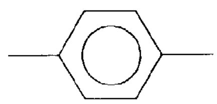 | $-CH_2-CH_2$ |

Tableau I

***Exemple 1: Synthèse de la bisimidazoline A***

Dans un réacteur de 100 ml muni d'une agitation à ancre, d'une entrée d'azote et d'un réfrigérant à reflux, et d'un chauffage à bain d'huile, 19,83 g de 1,2-diaminoethane (0,33 mol), 17,84 g de 1,4-dicyanobutane (0,165 mol) et 0,5 g de soufre (0,0156 mol) sont agités sous azote jusqu'à dissolution du soufre (0,0156 mol) sont agités sous azote jusqu'à dissolution du soufre (30 min). 50 ml de n-pentanol sont ensuite ajoutés, et le milieu est chauffé à 100° C. Un dégagement d'ammoniac est observé et se termine 3 h après le début de la réaction. Le réacteur est ensuite purgé par un balayage d'azote pendant 1 h, puis refroidi à température ordinaire. La bisimidazoline A est recueillie par filtration, lavée au n-pentanol et recristallisée dans le benzonitrile. Rendement : 75,5 %. $T_f$ = 221,6° C.

R.M.N. $^1H$ (250 MHz, CD30D, ref TMS) : 1,79 (4H), 2,34 (4H), 3,51 (8H) 4,98 (2H).

| | | | | |
|---|---|---|---|---|
| $C_{10}H_{18}N_4$ : | Théorie (%) : | C 61,82 ; | H 9,34 ; | N 28,84 |
| | Mesuré (%) : | C 61,67 ; | H 9,52 ; | N 28,67 |

***Exemple 1 comparatif :***

Dans l'appareillage décrit à l'exemple 1, 19,83 g de 1,2-diaminoéthane (0,33 mol), 17,84 g de 1,4-dicyanobutane (0,165 mol), et 0,5 g de soufre (0,0156 mol) sont agités sous azote jusqu'à dissolution du soufre (30 min), puis le milieu est chauffé à 100° C pendant 3 h. On ajoute ensuite 5 g de zinc en poudre (0.076 mol), et le chauffage est prolongé 1 h. Après refroidissement, le milieu solidifié est broyé, suspendu dans 200 ml d'éthanol, chauffé 2 h à reflux et filtré à chaud. Le filtrat est évaporé et le résidu est recristallisé dans le benzonitrile. Rendement en A: 36 %.

***Exemple 2 : Synthèse de la bisimidazoline B :***

L'appareillage décrit dans l'exemple 1 est utilisé avec, 24,46 g de 1,2-diaminopropane (0,33 mol), 17,84 g de 1,4-dicyanobutane (0,165 mol) et 0,5 g de soufre (0,0156 mol). Le milieu est agité sous azote jusqu'à dissolution du soufre (30 min). 50 ml de n-pentanol sont ensuite ajoutés, et le milieu est chauffé à 100° C. Un dégagement d'ammoniac

est observé et se termine 3 h après le début de la réaction. Le réacteur est ensuite purgé par un balayage d'azote pendant 1 h, puis refroidi à température ordinaire. La bisimidazoline B est recueillie après évaporation du n-pentanol par recristallisation dans le tétrahydrofurane. Rendement : 61,2 %.$T_f$ = 123,4° C.

R.M.N. $^1H$ (250 MHz, $CDCl_3$, réf TMS) : 1,02 (6H), 1,51 (4H), 2,07 (4H), 2,95 (2H), 3,51 (2H), 3,75 (2H), 5,00 (2H).

| | | | | |
|---|---|---|---|---|
| $C_{12}H_{22}N_4$ : | Théorie (%) :<br>Mesuré (%) : | C 64,83 ;<br>C 64,21 ; | H 9,97 ;<br>H 10,10 ; | N 25,20<br>N 24,96 |

***Exemple 2 comparatif :***

Dans l'appareillage décrit à l'exemple 1, 24, 46 g de 1,2-diaminopropane (0,33 mol), 17,84 g de 1,4-dicyanobutane (0,165 mol) et 0,5 g de soufre (0,0156 mol) sont agités sous azote jusqu'à dissolution du soufre (30 min), puis le milieu est chauffé à 100° C pendant 3 h. On ajoute ensuite 5 g de zinc en poudre (0.076 mol, et le chauffage est prolongé 1 h. Après refroidissement, le milieu solidifié est broyé, suspendu dans 200 ml de tétrahydrofurane (THF), chauffé 2 h à reflux et filtré à chaud. La bisimidazoline B précipite à froid, est récupérée par filtration puis recristallisée dans le THF. Rendement en B : 40 %.

***Exemple 3 : Synthèse de la bisimidazoline C***

L'appareillage et le mode opératoire décrits dans l'exemple 1 sont utilisés avec, 19,83 g de 1,2-diaminoethane (0,33 mol), 22,47 g de 1,6-dicyanohexane (0,165 mol) et 0,5 g de soufre (0,0156 mol). Rendement : 66,7 %. $T_f$ = 199,2° C.

R.M.N. $^1H$ (250 MHz, $CD_3OD$, ref TMS) : 1,57 (2H), 1,78 (4H), 2,39 (4H), 3,71 (8H), 5,16 (2H).

| | | | | |
|---|---|---|---|---|
| $C_{12}H_{22}N_4$ : | Théorie (%) :<br>Mesuré (%) : | C 64,83 ;<br>C 64,75 ; | H 9,97 ;<br>H 9,76 ; | N 25,20<br>N 25,00 |

***Exemple 4 : Synthèse de la bisimidazoline D***

L'appareillage décrit dans l'exemple 1 est utilisé avec, 19,83 g de 1,2-diaminoéthane (0,33 mol), 21,31 g de 1,4-dicyanobenzène (0,165 mol) et 0,5 g de soufre (0,0156 mol). Le milieu est agité sous azote jusqu'à dissolution du soufre (30 min). 50 ml de n-pentanol sont ensuite ajoutés, et le milieu est chauffé à 100° C. Un dégagement d'ammoniac est observé et se termine 3 h après le début de la réaction. Le réacteur est ensuite purgé par un balayage d'azote pendant 1 h, puis refroidi à température ordinaire. La bisimidazoline D est recueillie par filtration, suspendue dans le benzonitrile à 180° C, filtrée, lavée à l'acétone et séchée sous vide. Rendement: 55,2 %.

$T_f$ = 308,3° C.

R.M.N. $^1H$ (250 MHz, 1,1,1,3,3,3-hexafluoro-2-propanol-d/$CDCl_3$ (1/1 vol). ref TMS) : 4,12 (8H), 7,94 (4H).

| | | | | |
|---|---|---|---|---|
| $C_{12}H_{14}N_4$ : | Théorie (%) :<br>Mesuré (%) : | C 67,27 ;<br>C 67,31 ; | H 6,59 ;<br>H 6,55 ; | N 26,15<br>N 25,80 |

***Exemple 5 : Synthèse de la bisimidazoline E***

L'appareillage et le mode opératoire décrits dans l'exemple 1 sont utilisés avec, 29,09 g de 2,2-diméthyl-1,2-diaminoethane (0,33 mol), 17,84 g de 1,4-dicyanobutane (0,165 mol) et 0,5 g de soufre (0,0156 mol).

Rendement: 53,9 %. $T_f$ = 150,9° C.

R.M.N. $^1H$ (250 MHz, $CDCl_3$, ref TMS) : 1,15 (12H), 1,58 (4H), 2,14 (4H), 3,21 (4H), 4,65 (2H).

| | | | | |
|---|---|---|---|---|
| $C_{14}H_{26}N_4$ : | Théorie (%) :<br>Mesuré (%) : | C 67,16 ;<br>C 64,14 ; | H 10,47 ;<br>H 10,43 ; | N 22,38<br>N 22,12 |

***Exemple 6 : Synthèse de la bisimidazoline F***

L'appareillage et le mode opératoire décrits dans l'exemple 1 sont utilisés avec, 19,83 g de 1,2-diaminoethane (0,33 mol), 20,16 g de 1,5-dicyanopentane (0,165 mol) et 0,5 g de soufre (0,0156 mol). Rendement : 57,4 %. $T_f$ = 166,3° C.

R.M.N. $^1H$ (250 MHz, $CD_3OD$, ref TMS) : 1,53 (4H), 1,76 (4H), 2,40 (4H), 3,71 (8H), 5,18 (2H).

| | | | | |
|---|---|---|---|---|
| $C_{11}H_{20}N_4$ : | Théorie : | C 63,43 ; | H 9,68 ; | N 26,90 |
| | Mesuré : | C 63,33 ; | H 9,82 ; | N 26,74 |

***Exemple 7 : Réaction de l'oligoamide I avec la bisimidazoline A***

Dans un réacteur de 50 $cm^3$ équipé d'un chauffage à bain d'huile, d'une entrée et d'une sortie d'azote, et d'une agitation mécanique à ancre, on introduit 10,00 g (9,57 mmol) de I et 1,859 g (9,57 mmol) de bisimidazoline A. Le mélange est porté à 240° C sous agitation pendant 30 min pour donner, après refroidissement, un polymère ayant les caractéristiques suivantes :

[COOH] = 0,12 mol/kg
$[\eta]_{inh}$ = 0,54 dl/g
$T_f$ = 155° C
$T_{5\%}$ = 414° C.

***Exemple 8 : Réaction de l'oligoamide I avec la bisimidazoline B***

Dans un réacteur de 50 $cm^3$ équipé d'un chauffage à bain d'huile, d'une entrée et d'une sortie d'azote, et d'une agitation mécanique à ancre, on introduit 10,00 g (9,57 mmol) de I et 2,128 g (9,57 mmol) de bisimidazoline B. Le mélange est porté à 240° C sous agitation pendant 30 min pour donner, après refroidissement, un polymère ayant les caractéristiques suivantes :

[COOH] = 0,15 mol/kg
$[\eta]_{inh}$ = 0,45 dl/g
$T_f$ = 154° C
$T_{5\%}$ = 408° C.

***Exemple 9 : Réaction de l'oligoamide I avec la bisimidazoline C***

Dans un réacteur de 50 $cm^3$ équipé d'un chauffage à bain d'huile, d'une entrée et d'une sortie d'azote, et d'une agitation mécanique à ancre, on introduit 10,00 g (9,57 mmol) de I et 2,128 g (9,57 mmol) de bisimidazoline C. Le mélange est porté à 240° C sous agitation pendant 30 min pour donner, après refroidissement, un polymère ayant les caractéristiques suivantes :

[COOH] = 0,17 mol/kg
$[\eta]_{inh}$ = 0,36 dl/g
$T_f$ = 153° C
$T_{5\%}$ = 405° C.

***Exemple 10 : Réaction de l'oligoamide I avec la bisimidazoline A***

Dans un malaxeur de 100 $cm^3$, de type Brabender, muni d'un agitateur à doubles pales contrarotatives, et équipé d'un chauffage électrique et d'une entrée et d'une sortie d'azote, on introduit 50,00 g (47,87 mmol) de I et 9,30 g (47,87 mmol) de bisimidazoline A. Le mélange est porté à 240° C sous agitation pendant 15 min pour donner, après refroidissement, un polymère ayant les caractéristiques suivantes :

[COOH] = 0,07 mol/kg
$[\eta]_{inh}$ = 0,85 dl/g
$T_f$ = 156° C
$T_{5\%}$ = 412° C.

***Exemple 11: Réaction de l'oligomère tribloc II avec la bisimidazoline A***

Dans un réacteur de 50 $cm^3$ équipé d'un chauffage à bain d'huile, d'une entrée et d'une sortie d'azote, et d'une agitation mécanique à ancre, on introduit 10,00 g (3,55 mmol) de II et 0,690 g (3,55 mmol) de bisimidazoline A. Le

mélange est porté à 240° C sous agitation pendant 30 min pour donner, après refroidissement, un polymère ayant les caractéristiques suivantes :

[COOH] = 0,16 mol/kg
$[\eta]_{inh}$ = 0,46 dl/g
$T_f$ = 152° C
$T_{5\%}$ = 401° C.

***Exemple 12 : Réaction de l'oligoamide III avec la bisimidazoline A***

Dans un réacteur de 250 $cm^3$ muni d'une agitation et équipé d'un système permettant de travailler sous atmosphère inerte ($N_2$) on introduit 186,5 g (0,1 mole) d'oligoamide III et 19,43 g (0,1 mole) de bisimidazoline A.

Le réacteur est plongé dans un bain d'huile porté à 280° C. Le milieu réactionnel est agité par un agitateur tournant à 50 tours/min dès que la viscosité du milieu est suffisamment faible pour le permettre. Après 15 minutes à 280° C, on observe une augmentation rapide de la viscosité du milieu réactionnel nécessitant une diminution de la vitesse d'agitation à 10 tours/min. Après 10 minutes dans ces conditions, la réaction est arrêtée.

Le polymère obtenu est translucide et ne présente selon l'analyse thermique qu'une transition vitreuse à 171° C. Sa viscosité de solution est de 0,95 dl $g^{-1}$.

***Exemple 13 : Réaction de l'oligoamide IV avec la bisimidazoline A***

Dans le même réacteur décrit à l'exemple 12 on introduit 150 g (0,05 mole) d'oligoamide IV et 9,71 g (0,05 mole) de bisimidazoline A. En opérant dans des conditions analogues à celles de l'exemple 12, on observe après 10 minutes à 280° C une évolution de la viscosité du milieu réactionnel qui nécessite une diminution de la vitesse d'agitation. La réaction est arrêtée dans. les cinq minutes suivantes.

Le polymère obtenu est translucide et ne présente selon l'analyse thermique qu'une transition vitreuse à 174° C. Sa viscosité de solution est de 0,85 dl $g^{-1}$.

***Exemple 14 : Réaction de l'oligoamide V avec la bisimidazoline D***

Dans le réacteur décrit à l'exemple 11, on introduit 25,80 g (0,01 mole) d'oligoamide V et 2,14 g (0,01 mole) de bisimidazoline D. Le réacteur est plongé dans un bain régulant à 295° C. Le milieu devient fluide après 5 minutes à cette température. On l'agite alors à la vitesse de 50 tours/minute pendant 15 minutes. Puis, la vitesse d'agitation est réduite à 10 tours/minute et la réaction est poursuivie encore 5 minutes avant d'être arrêtée.

Le polymère obtenu est blanchâtre et opaque. Sa viscosité est de 0,70 dl $g^{-1}$.

L'analyse thermique révèle, outre une transition vitreuse à 80° C, un point de fusion à 278° C.

**Revendications**

**1.** Polymères et copolymères comprenant au moins un motif récurrent de formule :

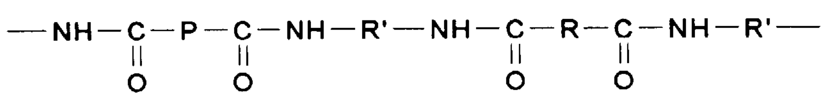

dans laquelle :

- R est une liaison simple, une chaîne hydrocarbonée,
- R' est une chaîne hydrocarbonée aliphatique où aromatique, pouvant être substituée et dont la partie la plus courte reliant les deux motifs -NH- voisins comporte deux ou trois atomes de carbone, et

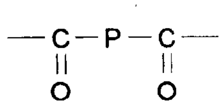 est le reste d'un oligomère 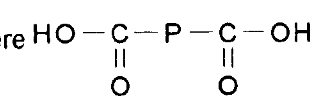

**2.** Polymères et copolymères selon la revendication 1, dans lesquels R est un groupe $-(CH_2)_p-$, avec p = 4 ou 6.

**3.** Polymères et copolymères selon la revendication 1, dans lesquels R est un groupe paraphénylène.

**4.** Polymères et copolymères selon l'une des revendications 1 à 3, dans lesquels R' est un groupe $-(CH_2)_2-$, $-CH(CH_3)-CH_2-$.

**5.** Polymères et copolymères selon l'une des revendications 1 à 4, dans lesquels :

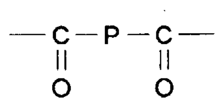

est le reste d'un oligomère comportant :

- un ou plusieurs blocs de polyamide, et/ou
- un ou plusieurs blocs de polyester, et/ou
- un ou plusieurs blocs de polyéther.

**6.** Procédé d'obtention de polymères et copolymères comprenant au moins un motif récurrent de formule :

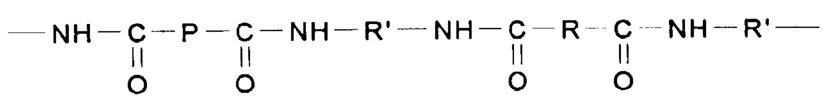

dans laquelle :

- R est une liaison simple, une chaîne hydrocarbonée,
- R' est une chaîne hydrocarbonée aliphatique ou aromatique, pouvant être substituée et dont la partie la plus courte reliant les deux motifs -NH- voisins comporte deux ou trois atomes de carbone, et

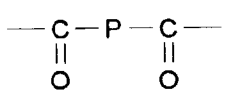 est le reste d'un oligomère 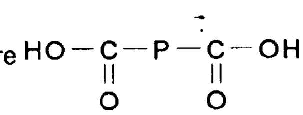

par une réaction d'addition en masse d'un ou plusieurs oligomère(s)

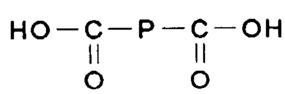

et d'une ou plusieurs bisimidazoline(s) de formule(s) :

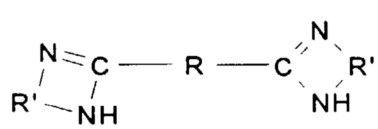

à une température supérieure à la température de fusion du ou des oligomère(s), à pression atmosphérique.

**7.** Procédé selon la revendication 6, caractérisé en ce que la température du milieu réactionnel est choisie entre 100 et 350° C, de sorte que la viscosité du ou des oligomères soit inférieure à 500 Pa.s, et en ce que la durée de la

réaction est comprise entre 1 et 120 minutes.

**8.** Procédé selon la revendication 6 ou 7, caractérisé en ce qu'on ajoute au milieu réactionnel 0,001 à 2 % en poids, par rapport aux oligomères et bisimidazolines, d'un ou plusieurs catalyseurs.

**9.** Procédé selon l'une des revendications 6 à 8, caractérisé en ce que la réaction d'addition en masse est effectuée en discontinu dans un réacteur agité, ou en continu dans un extrudeuse ou dans un réacteur continu.

**10.** Procédé de préparation des bisimidazolines à partir des dinitriles et diamines caractérisé par l'ajout d'un alcool aliphatique de point d'ébullition supérieur à 80° C.

**11.** Procédé selon la revendication 10 caractérisé en ce que l'alcool aliphatique est le n-pentanol.

Office européen des brevets

# RAPPORT DE RECHERCHE EUROPEENNE

Numero de la demande
EP 96 40 0901

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| D,A | EP-A-0 581 642 (ELF ATOCHEM)<br>--- | | C08G69/48<br>C08G63/91<br>C08G65/32<br>C08G69/40<br>C08G69/44 |
| A,D | EP-A-0 581 641 (ELF ATOCHEM)<br>--- | | |
| A | EP-A-0 019 061 (TEIJIN)<br>----- | | |

| DOMAINES TECHNIQUES RECHERCHES (Int.Cl.6) |
|---|
| C08G |

Le présent rapport a été établi pour toutes les revendications

| Lieu de la recherche | Date d'achèvement de la recherche | Examinateur |
|---|---|---|
| LA HAYE | 28 Mai 1996 | Leroy, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)